# EUROPEAN PATENT SPECIFICATION

(11) **EP 0 347 053 B1**
(45) Date of publication and mention of the grant of the patent: **14.07.1993**
(21) Application number: 89305304.1
(22) Date of filing: 25.05.1989
(51) Int. Cl.: B23K 26/00

(54) **Laser drilling of components**
Laser-Bohren von Bauteilen
Perforer des pièces avec laser

(30) Priority: 13.06.1988 US 206125; 13.06.1988 US 206123
(43) Date of publication of application: 20.12.1989
(73) Proprietor: ROLLS-ROYCE plc, London, SW1E 6AT (GB)
(72) Inventor: Ma, Kong, Duluth Georgia 30136 (US); Pinder, John Timothy, Marietta Georgia 30068 (US)
(74) Representative: Bird, Vivian John

(56) References cited:
- EP-A- 0 013 657
- DE-A- 3 525 702
- FR-A- 2 482 495
- US-A- 4 504 727
- US-A- 4 737 613

## Description

This invention relates to laser drilling of components, and in particular, although not exclusively, to drilling holes in gas turbine components such as turbine blades.

Laser drilling of holes, such as film-cooling holes, into internal passages of turbine blades has been known for some time. One problem has been that of preventing the laser beam damaging the far face of the passage opposite to where the beam breaks through. Another problem has been in preventing material sputtered or vaporized by the beam being deposited on the inner surfaces of the passages.

Attempts have been made to insert barriers in the passages, and indeed in passages which are large and do not have complicated shapes, it may be possible to use solid barriers. Attempts have also been made to pour liquids, such as waxes, but there have been difficulties in preventing the wax solidifying as soon as it contacts the cold metal turbine blade. Another difficulty has been in removing the wax and this has involved the use of steam autoclaves.

With current laser technology, it is known that the quality of the beam at the component surface may vary due to fluctuation of the laser beam energy, misalignment, and the shape of the beam, or focusing problems with the optical system. This degradation will affect the quality of the results particularly for holes with diameters of 0.5mm (0.020 inches) or smaller. Therefore, there is a need for a real-time hole size monitoring and laser control system to enhance the quality and consistency of results.

One approach to the problem of drilling holes in a workpiece surface has been disclosed in French Patent 2482495. In this patent there is disclosed an electron beam hole drilling process in which the workpiece surface where the hole exits is covered with a backer, comprising particulate material bonded to itself and the exit surface by a binding agent which is at least partly convertible into a liquid for removal after drilling. The backer enables a hole having substantial uniform symmetry along its length to be drilled and is said to be particularly useful for hollow parts and contoured surfaces. In a preferred embodiment the backer is composed of a nonmetallic particulate material such as glass while the binder is a soluble silicate.

However, although French Patent 2482495 also contemplates the use of a laser beam instead of an electron beam it does not address the problems of detecting when the beam breaks through the wall of the workpiece and of monitoring the size of the hole produced.

A second approach to the problem of laser drilling a hole through a surface is discussed in US Patent 4504727. Here, a laser drilling control system utilizing photoacoustic feedback is described. The control system provides a monitoring of the laser drilling of a multilayer printed circuit board thereby allowing uniform drilling through layers having different optical and photoacoustic properties by both analyzing the photoacoustic feedback signals received, and adjusting optimally the laser parameters such as pulse duration, wavelength, energy, pulse repition rate, and the number of pulses, for each successive layer. The system also provides an end point detection which prevents underdrilling overheating, and overdrilling of underlying layers and associated damages.

However, US Patent 4504727 does not contemplate the drilling of holes through a wall of a workpiece into a cavity therewithin and does not teach the detection of breakthrough of the beam into the cavity nor the monitoring of the size of the hole produced.

An object of the present invention is to provide a method of laser drilling which uses a barrier material that is easy to fill the cavities, is self supporting in the cavity, is easy to remove, and is effective in preventing the laser beam damaging the surfaces of the cavity.

A further object of the present invention is to provide a means for monitoring the size of the hole being drilled by the laser and for controlling the laser beam.

According to the present invention there is provided a method of drilling through an outer wall of a hollow component in which a laser beam is directed at the outer surface of the wall and emerges from the inner surface, the method including the step of providing at the inner surface of the wall, in the vicinity of where the beam emerges, a thixotropic medium that comprises material for dispersing the laser light, characterised in that the thixotropic medium comprises material which emits light when contacted by the laser beam light and the method includes the step of monitoring the light emitted by the medium to provide an indication of the size and shape of a hole drilled by the beam.

The invention will now be described, by way of an example, with reference to the accompanying drawings, in which:
Figure 1 illustrates schematically apparatus incorporating the present invention, and
Figure 2 illustrates a turbine blade suitable for being drilled using the apparatus of Figure 1.

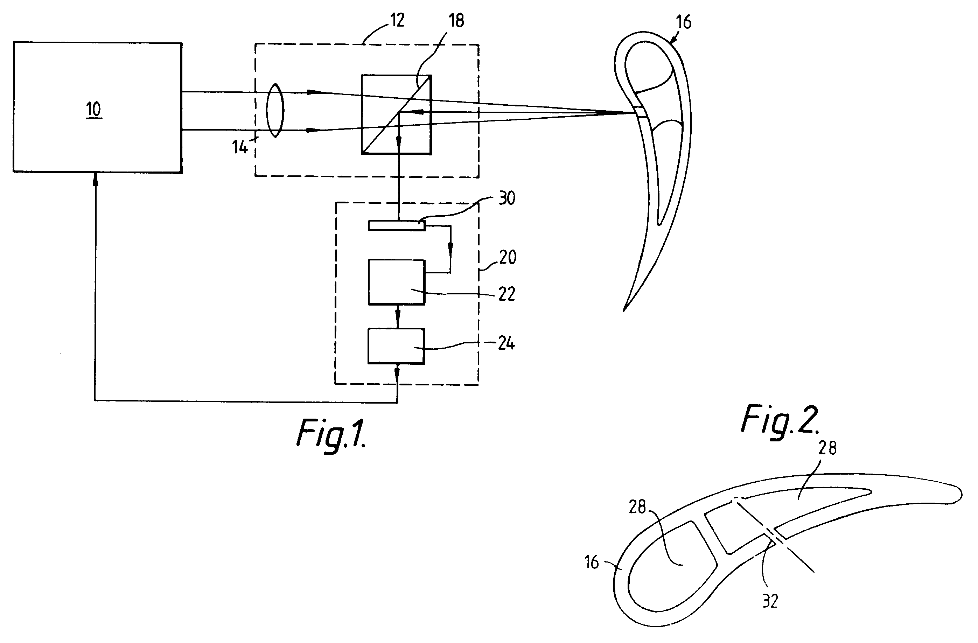

Referring to Figure 1 of the drawings the apparatus comprises a pulsed Nd-YAG laser 10 (typically of the type manufactured and sold in the USA by RAYCON). The laser produces a beam of approximately 0.25 to 0.75mm (0.010 to 0.030 inches) diameter with an average energy of 400 watts. An optical system 12 is provided which includes a lens 14 for focusing the laser beam on to the surface of the component to be drilled. The component 16 may be a turbine blade 16 as shown in Figure 2. The optical system 12 includes a beam splitter 18 or half silvered mirror, which directs light received from the component to a monitoring and detection system 20. The monitoring system comprises a spectrographic analyzer 22, and a laser control system 24.

Referring to Figure 2, there is shown schematically a cross-section through the airfoil of a turbine blade 16 which is to be drilled using the apparatus of Figure 1. The turbine blade 16 comprises one or more cooling passages 28 which extend from the root portion through the airfoil portion. The apparatus of Figure 1 is intended to be used for drilling the very small diameter film-cooling holes 32 which pass through the wall of the blade into the internal cavities or passages 28.

At least the inner surfaces of the passages 28 are contacted prior to drilling the holes 32 with a visco-elastic medium which is a thixotropic slurry comprising material for dispersing the laser light and material which emits light when the laser light contacts it. Ideally the whole of the passages 28 are filled with the slurry.

The slurry can be a colloidal sol, a colloidal gel, or a mixture or suspension which is thixotropic, and will form at least a self supporting coating on the surfaces of the passages 28.

We prefer to use a slurry based on an anionically charged polyacrylamide such as that marketed in the USA by Southeastern Laboratories, Inc. under the Registered Trade Mark SELfloc 2240.

Polyacrylamide is a water soluble high polymer used as a flocculation agent in water and waste treatment applications. To the polyacrylamide is added acrylic particles, for example Amberlite (Registered Trade Mark of Rohm and Haas), which is effective in dispersing the laser beam. Other dispersants, such as polytetrafluoroethylene (PTFE), TiO₂, phosphors, and light scattering oxides could be used. The effectiveness of the laser dispersant material will depend upon the following factors.
(a) Size of the dispersant particles - the preferred size is greater than the wave length of the laser light and probably in the range of 30 to 70µm (or at least small enough not to block the hole to be drilled).
(b) Amount of dispersant in the slurry.
(c) Distance between the hole to be drilled and the far wall of the passage 28 (measured along the line of the drilling).
(d) Hole size.
(e) Pulse length of the laser beam.
(f) Power of laser pulse.
(g) Effect of other additives.

In order to provide a method of detecting when the laser breaks through into the passage 28 and also to provide a way of indicating the hole size, a light emitting material is added to the slurry.

The light emitting material may be a chromophore of the electron donor type, such as an auxochrome, or an electron acceptor type. The electron donor type would fluoresce at longer wavelengths than the exciting laser light whereas the electron acceptor types emit shorter wavelengths. Suitable auxochromes are believed to be stilbene or derivatives of stilbene (e.g. diphenylethylene or toluylene). Stilbene is insoluble in water and is well suited for the needs of the invention.

Other types of light emitting materials may be suitable providing that they are relatively inert towards the alloy being drilled. For example, ionic complexes may be suitable. Indeed, phosphorescent, or luminescent materials may also be suitable.

We prefer to impregnate a fluorescent dye into the dispersant particles. These dyes produce light at specific wavelengths. It is thought to be advantageous to add the dye to the dispersant particles because the particles and dye could then be recovered and reused.

One example of a suitable slurry is one that comprises a suspension of 1 to 5% polyacrylamide in water to which is added typically 25% (or more) acrylic particles which have been coloured by the application of a coloured fluorescent dye.

In use, the thixotropic slurry is injected through a nozzle so as to impart a high amount of shear and thereby lower the viscosity to enable the slurry to flow readily into the passage 28. The slurry is allowed to become highly viscous and self supporting in the passage 28.

The turbine blade 16 is then positioned in the path of the laser beam and aligned to enable the desired holes to be drilled. The detection system 20 is set to discriminate between the spectrum of light emitted by the fluorescent material, and the light reflected or emitted by the turbine blade as it is drilled, and the laser is switched on to produce pulses of laser light.

As soon as the laser breaks through the wall of the turbine blade 16, and strikes the slurry, the light emitted by the fluorescent material is detected. The monitoring and detection system 20 has a two dimensional light sensitive receiver such as a digital camera 30 so that an image can be produced of the shape and size of the hole. Image intensifying devices and image analysing devices could be employed to extract information from the image in terms of hole shape and size if desired. Hence the monitoring system can be programmed to respond to an image of the shape and size of the hole to control the laser and switch it off when a predetermined shape and size is detected.

During drilling the slurry also protects the inner surfaces of the passage 28 and prevents any sputtered or vaporized materials from coating the surfaces of the passage 28. When drilling is complete the slurry is washed away by flowing water through the passages 28.

## Claims

1. A method of drilling through an outer wall of a hollow component (16) in which a laser beam is directed at the outer surface of the wall and emerges from the inner surface, the method including the step of providing at the inner surface of the wall, in the vicinity of where the beam emerges, a thixotropic medium that comprises material for dispersing the laser light, characterised in that the thixotropic medium comprises material which emits light when contacted by the laser beam light and the method includes the step of monitoring the light emitted by the medium to provide an indication of the size and shape of a hole (32) drilled by the beam.

2. A method according to claim 1 characterised in that the medium comprises a suspension of between 1 and 5% by weight polyacrylamide in water.

3. A method according to claim 1 characterised in that the light emitting material is a chromophore selected from the group consisting of stilbene and derivatives of stilbene.

4. A method according to claim 1 characterised in further comprising the step of monitoring light reflected from the component (16) so as to detect light emitted by the medium when the laser beam breaks through the second surface.

5. A method according to claim 1 characterised in that it includes the step of applying the medium to the second surface by forcing it through a nozzle so as to cause the viscosity of the medium to be lowered and thereby the medium to flow readily over the second surface, and subsequently allowing the viscosity of the medium to increase when on the second surface.

## Patentansprüche

1. Verfahren zum Durchbohren einer Außenwand eines hohlen Bauteils (16), wobei ein Laserstrahl auf die Außenoberfläche der Wand gerichtet wird und aus der Innenoberfläche wieder austritt, und wobei das Verfahren das Bereitstellen eines thixotropen Mediums an der Innenoberfläche der Wand in der Nähe des Strahlaustritts zum Streuen des Laiserlichts umfaßt, dadurch gekennzeichnet, daß das thixotrope Medium Material enthält, das bei Beruhrung durch das Laserstrahllicht Licht aussendet, und daß das Verfahren das Überwachen des von dem Medium ausgesandten Lichts zur Herstellung einer Anzeige von Größe und Form einer durch den Strahl gebohrten Öffnung (32) aufweist.

2. Verfahren nach Anspruch 1, dadurch gekennzeichnet, daß das Medium eine Suspension von zwischen 1 und 5 Gew.-% Polyacrylamid in Wasser aufweist.

3. Verfahren nach Anspruch 1, dadurch gekennzeichnet, daß das lichtaussendende Material ein Farbträger ist, der aus der aus Stilben und Derivaten von Stilben bestehenden Gruppe ausgewählt ist.

4. Verfahren nach Anspruch 1, dadurch gekennzeichnet, daß es außerdem das Überwachen von Licht umfaßt, das von dem Bauteil (16) reflektiert wird, um das von dem Medium emittierte Licht zu erfassen, wenn der Laserstrahl durch die zweite Oberfläche durchbricht.

5. Verfahren nach Anspruch 1, dadurch gekennzeichnet, daß es das Aufbringen des Mediums auf die zweite Oberfläche durch Hindurchdrücken desselben durch eine Düse umfaßt, so daß die Viskosität des Mediums herabgesetzt wird und dadurch das Medium leicht über die zweite Oberfläche fließt, und durch anschließendes Ansteigenlassen der Viskosität des Mediums, wenn es sich auf der zweiten Oberfläche befindet.

## Revendications

1. Procédé de perçage d'une paroi extérieure d'un composant creux (16), dans lequel un faisceau laser est orienté sur la surface extérieure de la paroi et sort par la surface intérieure, le procédé comprenant l'étape d'agencement d'un milieu thixotrope qui comprend un matériau servant à disperser la lumière laser, sur la surface intérieure de la paroi, à proximité immédiate de l'endroit où sort le faisceau, caractérisé en ce que le milieu thixotrope comprend un matériau qui émet de la lumière lorsqu'il est mis en contact avec la lumière de faisceau laser et le procédé comprend l'étape de surveillance de la lumière émise par le milieu, pour fournir une indication sur la taille et la forme d'un trou (32) perforé par le faisceau.

2. Procédé selon la revendication 1, caractérisé en ce que le milieu comprend une suspension contenant entre 1 et 5 % en poids de polyacrylamide dans de l'eau.

3. Procédé selon la revendication 1, caractérisé en ce que le matériau émettant de la lumière est un chromophore sélectionné dans le groupe composé de stilbène et de dérivés de stilbène.

4. Procédé selon la revendication 1, caractérisé par le fait de comprendre en outre le procédé de surveillance de la lumière réfléchie par le composant (16), de manière à détecter une lumière émise par le milieu lorsque le faisceau laser traverse la seconde surface.

5. Procédé selon la revendication 1, caractérisé en ce qu'il comprend l'étape d'application du milieu sur la seconde surface, en le forçant à passer à travers une use, de manière à provoquer la diminution de la viscosité du milieu et l'écoulement facile du milieu sur la seconde surface et à permettre ensuite l'augmentation de la viscosité du milieu, lorsqu'il se trouve sur la seconde surface.
